# EUROPÄISCHE PATENTSCHRIFT

(11) **EP 2 760 932 B1**
(45) Veröffentlichungstag und Bekanntmachung des Hinweises auf die Patenterteilung: **16.12.2015**
(21) Anmeldenummer: 12762625.7
(22) Anmeldetag: 27.09.2012
(51) Int. Cl.: C08L 69/00

(54) **POLYCARBONAT MIT GLASFASERN**
POLYCARBONATE COMPRISING GLASS FIBRES
POLYCARBONATE CHARGÉ DE FIBRES DE VERRE

(30) Priorität: 28.09.2011 EP 11183072
(43) Veröffentlichungstag der Anmeldung: 06.08.2014
(73) Patentinhaber: Covestro Deutschland AG, 51373 Leverkusen (DE)
(72) Erfinder: DERN, Gesa, 40627 Düsseldorf (DE); SÄMISCH, Birte, 50670 Köln (DE); CASSEL, Tanja, 46149 Oberhausen (DE)
(74) Vertreter: Levpat
(86) Internationale Anmeldenummer: PCT/EP2012/069087
(87) Internationale Veröffentlichungsnummer: WO 2013/045552

(56) Entgegenhaltungen:
- EP-A2- 0 063 769
- EP-A2- 0 472 064

## Beschreibung

Die vorliegende Erfindung betrifft eine thermoplastische Formmasse aus Polycarbonat und anorganischen Füllstoffen, die einen hohen Grad an Steifigkeit aufweist und trotzdem eine gute Zähigkeit, sowie die Spannungs-Delmungs-Charakteristik entsprechend eines unverstärkten Polycarbonats zeigt. Überraschenderweise zeigt die Formmasse zudem eine Verbesserung der Flammwidrigkeit.

Die Erfindung betrifft insbesondere mit Glasfasern gefüllte, flammgeschützte, thermoplastische Formmassen sowie deren Herstellung und Verwendung. Das Eigenschaftsprofil ist dabei überraschenderweise unabhängig von dem Wechselwirkungsgrad der Glasfaser mit der Polycarbonatmatrix.

Diese Formmassen eignen sich insbesondere für Gehäuseteile, die ein hohe Steifigkeit und Maßhaltigkeit benötigen und zudem hohe Zähigkeit gegenüber Stößen standhalten müssen, wie z.B. Gehäuse im elektronischen Bereich (Drucker, Schaltkästen, Lautsprecher, etc.) sowie Gehäuse für die mobile Elektronik (Kamera, Mobilfunkgeräte, etc.). Darüber hinaus eignen sich die Formmassen auch für Schutzausrüstung, wie Schutzhelme oder schlagfeste, bruchsichere Platten.

Die EP 0 063 769 A2 beschreibt Zusammensetzungen umfassend ein aromatisches Polycarbonat, Glasfasern, ein Anhydrid-Olefin-Copolymer und gegebenenfalls ein Flammschutzmittel.

Aus JP3212468 sind zum einen nicht-flammgeschützte Polycarbonat-Zusammensetzungen aus 45-97 Gew.% eines aromatischen Polycarbonatharzes mit 3-55 Gew.-% eines anorganischen Füllstoffes (Glasflocken, Metallfolcken, Mica oder Talk) und 0.02-3 Gew.-% eines olefinischen Wachses, das carboxylische Gruppen oder Derivate hiervon enthält, bekannt. Zum anderen werden Zusammensetzungen beschrieben, die 7-96 Gew.% eines aromatischen Polycarbonatharzes und 1-90 Gew.-% eines olefinischen Pfropfpolymers mit 3-55 Gew.-% eines anorganischen Füllstoffes (Glasflocken, Metallfolcken, Mica oder Talk) und 0.02-3 Gew.-% des o.g. olefinischen Wachses, enthalten.

In JP 3474251 werden micht-flammgeschützte thermoplastische Zusammensetzungen beschrieben, die neben einem aromatische Polycarbonatharz und einem pfropf-modifizierten Olefin-Kautschuk, einem Polyorganosiloxan-Kautschuk, eine verstärkenden Faser und ein oder mehrere olefinische Wachse und/ oder olefinische Polymere enthalten, die carboxylische oder Carbonsäureanhydrid-Gruppen aufweisen. Die Zusammensetzung zeigt eine hohe Dimensionsstabilität, sowie gute mechanische Eigenschaften, wie eine Erhöhung der Schlagzähigkeit.

US 5728765 beschreibt eine schlagzähe Polycarbonatzusammensetzung, die bis zu 40% einer Glasfasersorte enthält, die eine nicht-wechselwirkende Eigenschaft mit der Polymermatrix zeigt und mit 0.5-4% Silikonkautschukpuder versetzt ist.

Aufgabe der vorliegenden Erfindung war es somit Polycarbonatverbindungen mit einer Kombination aus guter Zähigkeit, sowie Spannungs-Dehnungs-Charakteristik und einer verbesserten Flammwidrigkeit, die die Nachteile der aus dem Stand der Technik bekannten Zusammensetzungen nicht aufweisen, insbesondere nicht den üblichen Verlust der durch Zugabe von Glasfasern hervorgerufenen Zähigkeit oder aber den Verlust des Flammschutzes bei Zugabe notwendiger hoher Mengen eines Schlagzähmodifikators.

Überraschenderweise wurde nun gefunden, dass die oben genannten Eigenschaften erhalten werden, wenn ein kautschukfreies anhydridmodifiziertes alpha-Olefin-Terpolymer in gefüllten, flammgeschützten Polycarbonatzusammensetzungen eingesetzt wird.

Die so zusammengesetzten Formmassen zeichnen durch verbesserte mechanische Eigenschaften wie eine gute Zähigkeit in Verbindung mit einer guten die Spannungs-Dehnungs-Charakteristik sowie einer verbesserten Flammwidrigkeit aus.

Gegenstand der Erfindung sind flammwidrige, thermoplastische Formmassen enthaltend
A) 47,500 bis 97,939 Gew.-Teile, vorzugsweise 60,0 bis 95,0 Gew.-Teile, besonders bevorzugt 74,0 bis 86,0 Gew.-Teile mindestens eines aromatischen Polycarbonats,
B) 0,001 bis 1,000 Gew.-Teile, bevorzugt 0,050 bis 0,800 Gew.-Teile, weiter bevorzugt 0,100 bis 0,600 Gew.-Teile, besonders bevorzugt 0,100 bis 0,300 Gew.-Teile, mindestens eines Flammschutzmittels,
C) 0,01 bis 0,50 Gew.-Teilen, bevorzugt 0,05 bis 0,50 Gew.-Teilen, weiter bevorzugt 0,10 bis 0,50 Gew.-Teilen, noch weiter bevorzugt von 0,10 bis 0,40 Gew.-Teilen, besonders bevorzugt von 0,10 bis 0,30 Gew, ganz besonders bevorzugt von 0,20 bis 0,30 Gew.-Teilen, mindestens eines kautschukfreien anhydridmodifizierten alpha-Olefin-Terpolymers,
D) 2,0 bis 40,0 Gew.-Teilen, bevorzugt 3,0 bis 30,0 Gew.-Teilen, weiter bevorzugt 5,0 bis 20,0 Gew.-Teilen, und besonders bevorzugt 7,0 bis 14,0 Gew.-Teilen, mindestens eines anorganischen Füllstoffs,
E) 0,05 Gew.-Teile bis 1,00 Gew.-Teile, weiter bevorzugt 0,10 Gew.-Teile bis 0,75 Gew.-Teile, besonders bevorzugt 0,15 Gew.-Teile bis 0,60 Gew.-Teile, und ganz besonders bevorzugt 0,20 Gew.-Teile bis 0,50 Gew.-Teile mindestens eines Entformungsmittels,
F) 0 bis 10,0 Gew.-Teile, bevorzugt 0,5 bis 8,0 Gew.-Teile, besonders bevorzugt 1,0 bis 6,0 Gew.-Teile weitere übliche Additive,
wobei die Summe der Gewichtsteile der Komponenten A) bis F) sich zu 100 Gewichtsteilen addiert.

In einer bevorzugten Ausführungsform besteht die Zusammensetzung nur aus den Komponenten A)-E), in einer weiter bevorzugten Ausführungsform aus den Komponenten A) - F).

Bevorzugte Ausführungsformen und einzelne Verbindungen/Inhaltsstoffe der Komponenten A-F können sowohl einzeln als auch in Kombination miteinander verwendet werden, Dasselbe gilt für die Kombination der oben genannten Angaben zu Gewichtsteilen unterschiedlicher Komponenten, die frei kombiniert werden können.

In einer alternativen Ausführungsform mit sphärischen Füllstoffen beträgt der Anteil der Komponente C) vorzugsweise von 0,1 bis 1,5 Gew.-Teile, weiter bevorzugt von 0,5 bis 1,0 Gew.-Teile.

### Komponente A)

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonatstandard) zwischen 5000 und 200.000 g/mol, vorzugsweise zwischen 18.000-36.000 g/mol, weiter bevorzugt zwischen 22.000-34.000 g/mol, noch weiter bevorzugt zwischen 24.000-32.000 g/mol, und besonders bevorzugt zwischen 26.000-32.000 g/mol.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

### Komponente B)

Geeignete Flammschutzmittel im Sinne der vorliegenden Erfindung sind unter anderem Alkali- bzw. Erdalkalisalze von aliphatischen bzw. aromatischen Sulfonsäure-, Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocabonyl)-sulfanylimid-Kaliumsalz.

Salze die gegebenenfalls in den erfindungsgemäßen Formmassen verwendet werden können, sind beispielsweise: Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Natrium- oder Kalium-diphenylsulfonsulfonat, Natrium-oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium-oder Kalium-pyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat, N-(p-tolylsulfonyl-)-p-toluolsulfimid-Kaliumsalz, N-(N'-Benzyl¬amino¬carbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfonsulfonat und Natrium oder Kalium-2,4,6-trichlorbenzoat und N-(p-Tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kalium-diphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet.

Als zusätzliche Flammschutzmittel kommen z.B. phosphorhaltige Flammschutzmittel ausgewählt aus den Gruppen der Mono- und oligomeren Phosphor- und Phosphon¬säure¬ester, Phosphonatamine, Phosphonate, Phosphinate, Phosphite, Hypophosphite, Phosphinoxide und Phosphazene, wobei auch Mischungen von meh¬reren Kompo¬nenten ausgewählt aus einer oder verschiedenen dieser Gruppen als Flammschutz¬mittel zum Einsatz kommen können in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat. Des weiteren kommen als phosphorhaltige Flammschutzmittel Phosphonatamine in Betracht. Die Herstellung von Phosphonataminen ist beispielsweise in US-Patentschrift 5,844,028 beschrieben. Phosphazene und deren Herstellung sind beispielsweise in EP A 728 811, DE A 1 961668 und WO 97/40092 beschrieben. Auch können Siloxane, phosphorylierte Organosiloxane, Silicone oder Siloxysilane als Flammschutzmittel Verwendung finden, was beispielsweise in der EP 1 342 753, in der DE 10257079A sowie in der EP 1 188 792 näher beschrieben wird.

Ferner kann als zusätzliches Flammschutzmittel Bisphenol-A-diphosphat eingesetzt werden, das u.a. als Reofos® BAPP (Firma Chemtura, Indianapolis, USA), NcendX® P-30 (Firma Albemarle, Baton Rouge, Loui¬siana, USA), Fyrolflex® BDP (Firma Akzo Nobel, Arnheim, Niederlande) oder CR 741® (Firma Daihachi, Osaka, Japan) kommerziell erhältlich ist.

Weitere Phosphorsäureester, die im Rahmen der vorliegenden Erfindung als zusätzliche Flammschutzmittel eingesetzt werden können, sind zudem Triphenylphosphat, welches unter anderem als Reofos® TPP (Firma Chemtura), Fyrolflex® TPP (Firma Akzo Nobel) oder Disflamoll® TP (Firma Lanxess) angeboten wird und Resorcindiphosphat. Resorcoindiphosphat läßt sich als Reofos RDP (Firma Chemtura) oder Fyrolflex® RDP (Firma Akzo Nobel) käuflich erwerben.

Im Rahmen der vorliegenden Erfindung können die Phosphorverbindungen vorzugsweise zusätzlich optional in Mengen von 1 Gew.% bis 30 Gew.%, bevorzugt 1 Gew.% bis 18 Gew.%, besonders bevorzugt 2 Gew.% bis 15 Gew.%, insbesondere 4 bis 14 Gew.% und ganz besonders bevorzugt 6 bis 14 Gew.%, jeweils bezogen auf die Gesamtzusammensetzung, eingesetzt werden.

Weitere geeignete zusätzliche Flammschutzmittel im Sinne der vorliegenden Erfindung sind halogenhaltige Verbindungen. Hierzu zählen bromierte Verbindungen wie bromierte Oligocarbonate (z.B. Tetrabrombisphenol-A oligocarbonat BC-52®R, BC-58®, BC-52HP® der Firma Chemtura), Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek® 68PB der Firma Ferro Corporation, PDBS 80 und Firemaster® PBS-64HW der Firma Chemtura).

Im Rahmen der vorliegenden Erfindung können zusätzliche bromhaltige Verbindungen optional in Mengen von 0,01 Gew.% bis 30 Gew.%, bevorzugt 0,1 Gew.% bis 30 Gew.%, besonders bevorzugt 0,1 Gew.% bis 25 Gew.% und ganz besonders bevorzugt 0,5 Gew.% bis 5 Gew.% jeweils bezogen auf die Gesamtzusammensetzung eingesetzt werden.

Als Antitropfmittel kann den Formmassen zusätzlich Polytetrafluorethylen (PTFE) zugefügt werden. Letzteres ist in diversen Produktqualitäten kommerziell verfügbar. Hierzu zählen Additive wie Hostaflon® TF2021 oder aber PTFE-Blends wie Metallen® A-3800 (ca. 40% PTFE CAS 9002-84-0 und ca. 60 % Methylmethacrylat/Butylacrylat Copolymer CAS 25852-37-3 von Misubishi-Rayon) oder Blendex® B449 (ca. 50% PTFE und ca. 50 % SAN [aus 80 % Styrol und 20 % Acrylnitril] der Firma Chemtura.

Im Rahmen der vorliegenden Erfindung kann PTFE optional in Mengen von 0,05 Gew.% bis 5 Gew.%, bevorzugt 0,1 Gew.% bis 1,0 Gew.%, besonders bevorzugt 0,1 Gew.% bis 0,5 Gew.% jeweils bezogen auf die Gesamtzusammensetzung eingesetzt werden.

### Komponente C)

Die Komponente C im Sinne der vorliegenden Erfindung ist ein kautschukfreies anhydridmodifiziertes alpha-Olefin-Terpolymer, wobei das Anhydrid ein ungesättigtes Carbonsäureanhydrid ist.

Das Anhydrid ist vorzugsweise ausgewählt aus der Gruppe, die Maleinsäureanhydrid, Phthalsäureanhydrid, Fumarsäureanhydrid und Itaconsäureanhydrid sowie deren Mischungen umfaßt.

Besonders bevorzugt ist das Anhydrid Maleinsäureanhydrid.

Das alpha-Olefin-Terpolymer enthält vorzugsweise Bausteine ausgewählt aus der Gruppe, die besteht aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, sowie Gemische aus diesen.

Besonders bevorzugt enthält das Terpolymer als Bausteine Ethylen, 1-Propen und 1-Octen.

Das kautschukfreie anhydridmodifizierte Terpolymer ist dadurch charakterisiert, dass die Zusammensetzung
C1) 90,0-98,0 Gew.-%, vorzugsweise 92,0-97,5 Gew.-%, besonders bevorzugt 94,0-97,0 Gew.-% Terpolymer und
C2) 2,0-10,0 Gew.-%, vorzugsweise 2,5-8,0 Gew.-%, und besonders bevorzugt 3,0-6,0 Gew.-% Anhydrid enthält.

Das kautschukfreie anhydridmodifizierte Terpolymer hat vorzugsweise ein Molekulargewicht Mw von 2000-10000 g/mol, bevorzugt 2500-8000 g/mol, besonders bevorzugt 3000-6000 g/mol bestimmt durch GPC (Gelpermeationschromatographie) in Trichlorbenzol als Lösungsmittel mit Polystyrol als Standard.

Der olefinische Teil C1) des anhydridmodifizierten Terpolymers ist bevorzugt dadurch gekennzeichnet, dass
der Ethylenanteil 96,0-80,0 Gew.-%, weiter bevorzugt 92,0-84,0 Gew.-%;
der Propylenanteil 2,0-10,0 Gew.-%, weiter bevorzugt 4,0-8,0 Gew.-%; und
der Octenanteil 2,0-10,0 Gew.-%, weiter bevorzugt 4,0-8,0 Gew.-%, ist.

### Komponente D)

Füllstoffe im Sinne der vorliegenden Erfindung sind beispielsweise Glaskugeln, Glashohlkugeln, Glasflakes, Ruße, Graphite, Kohlenstoffnanoröhrchen, Quarze, Talk, Glimmer, Silikate, Nitride, insbesondere Bomitrid, Wollastonit, sowie pyrogene oder gefällte Kieselsäuren, wobei die Kieselsäuren BET-Oberflächen von mindestens 50 m²/g (nach DIN 66131/2) aufweisen.

Bevorzugt werden faserförmige Füllstoffe, wie metallische Fasern, Kohlenstofffasern, Kunststofffasern, Glasfasern oder gemahlene Glasfasern, verwendet und besonders bevorzugt Glasfasern oder gemahlene Glasfasern.

Bevorzugt werden Glasfasern in der Ausführungsform Endlosfaser (rovings), Langglasfasem und Schnittglasfasern verwendet, die aus M-, E-, A-, S-, R- oder C-Glas herstellt werden, wobei E-, A-, oder C-Glas weiter bevorzugt sind.

Der Durchmesser der Fasern beträgt bevorzugt 5 bis 25 µm, weiter bevorzugt 6 bis 20 µm, besonders bevorzugt 7 bis 15 µm.

Langglasfasern weisen bevorzugt eine Länge von 5 bis 50 mm, weiter bevorzugt von 5 bis 30 mm, noch weiter bevorzugt von 6 bis 15mm, und besonders bevorzugt von 7 bis 12 mm auf; sie werden beispielsweise in WO-A 2006/040087 beschrieben.

Die Schnittglasfasern weisen bevorzugt zu mindestens 70 Gew.% der Glasfasern eine Länge von mehr als 60 µm auf.

Vorzugsweise gelten die vorhergenannten Werte auch für andere erfindungsgemäß verwendete Fasern außer Glasfasern.

Die verwendeten Fasern, insbesondere die Glasfasern, zeichnen sich dadurch aus, dass die Auswahl der Faser nicht durch die Wechselwirkungscharakteristik der Faser mit der Polycarbonatmatrix beschränkt ist, während in der US 5728765 nur Glasfasern, die nicht mit der Polymermatrix wechselwirken, beschrieben werden.

Sowohl für eine starke Anbindung an die Polymermatrix, als auch bei einer nicht-anbindenden Faser zeigt eine Verbesserung der erfindungsgemäßen Eigenschaften der Zusammensetzungen.

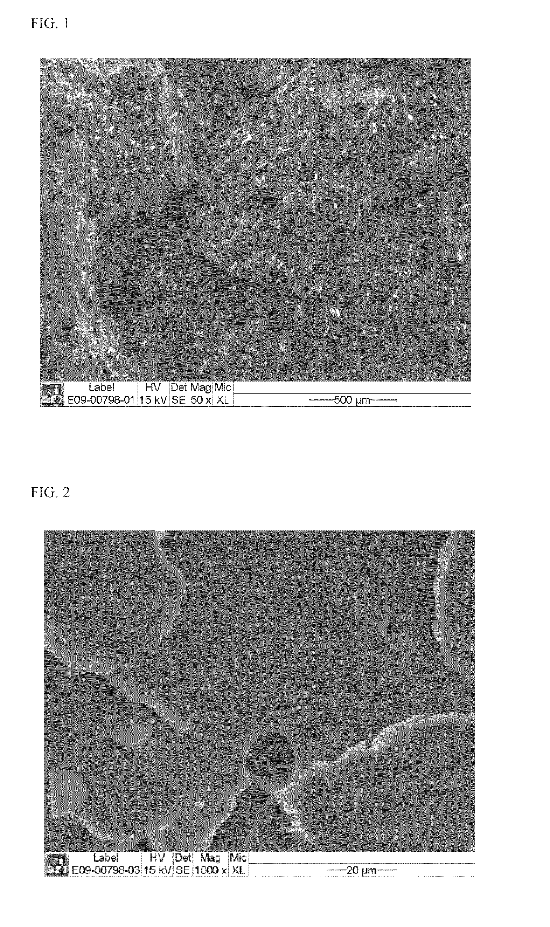

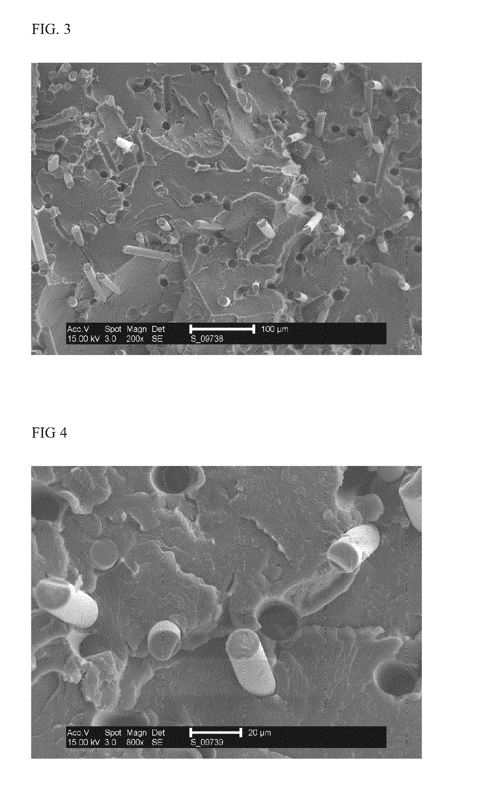

Eine starke Anbindung der Glasfaser an die Polymermatrix ist an den Tieftemperaturbruchoberflächen der rasterelektronenmikroskopischen Aufnahmen (Figur 1 und 2) zu erkennen: Es ist ersichtlich, dass die größte Anzahl der gebrochenen Glasfasern auf derselben Höhe wie die Matrix gebrochen sind und nur vereinzelt Glasfasern aus der Matrix herausstehen. Die rasterelektronenmikroskopischen Aufnahmen (Figur 3 und 4) zeigen den umgekehrten Fall der nichtanbindenen Charakteristik, dass die Glasfasern im Tieftemperaturbruch aus der Matrix stark herausstehen oder vollständig herausgeglitten sind.

In einer alternativen Ausführungsform ist der anorganische Füllstoff ein Füllstoff mit sphärischer Komgestalt. In Frage kommen als anorganische Füllstoffe insbesondere Mineralien, die zu über 97 Gew.% auf der Basis von Quarz (SiO₂) aufgebaut sind. Die Komgestalt ist dabei sphärisch und/oder annähernd sphärisch.

In bevorzugter Ausführungsform handelt es sich bei den sphärischen Füllstoffen um feinteilige Quarzmehle, die durch eisenfreie Mahlung mit nachfolgender Windsichtung aus aufbereitetem Quarzsand hergestellt wurden.

Diese Quarz-basierten Materialien werden im Folgenden auch Silikate genannt.

Die in der Erfindung verwendeten Silikate sind durch einen mittleren Durchmesser d50% von 2 bis 10 µm, vorzugsweise von 2.5 bis 8.0 µm, weiter bevorzugt von 3 bis 5 µm, und besonders bevorzugt von 3 µm, gekennzeichnet.

Der obere Durchmesser d_{95%} ist vorzugsweise von 6 bis 34 µm, weiter bevorzugt von 6.5 bis 25.0 µm, noch weiter bevorzugt von 7 bis 15 µm, und besonders bevorzugt von 10 µm.

Die Korngrößenverteilung (mittlere Durchmesser) wird durch Windsichten bestimmt.

Bevorzugt weisen die Silikate eine spezifische BET-Oberfläche, bestimmt durch Stickstoffadsorption gemäß ISO 9277, von 0.4 bis 8.0 m²/g, weiter bevorzugt von 2 bis 6 m²/g, und besonders bevorzugt von 4.4 bis 5.0 m²/g auf.

Weiter bevorzugte Silikate weisen nur maximal 3 Gew.% Nebenbestandteile auf, wobei vorzugsweise der Gehalt an
Al₂O₃< 2.0 Gew.%,
Fe₂O₃ < 0.05 Gew.%,
(CaO + MgO) <0.1 Gew.%,
(Na₂O + K₂O) < 0.1 Gew.%) ist, jeweils bezogen auf das Gesamtgewicht des Silikats.

Bevorzug werden Silikate mit einem pH-Wert, gemessen gemäß ISO 10390 in wäßriger Suspension im Bereich, 6 bis 9, weiter bevorzugt 6.5 bis 8.0 eingesetzt.

Sie weisen darüber hinaus eine Ölabsorptionszahl gemäß ISO 787-5 von bevorzugt 20 bis 30 g/100 g auf.

In einer bevorzugten Ausführungsform kommen anorganische Füllstoffe, insbesondere Silikate, zum Einsatz, die eine Beschichtung mit Silicium-organischen Verbindungen haben, wobei bevorzugt Epoxysilan-, Methylsiloxan-, und Methacrylsilan-Schlichten zum Einsatz kommen. Besonders bevorzugt ist eine Epoxysilanschlichte.

Die Beschlichtung von anorganischen Füllstoffen erfolgt nach den allgemeinen, dem Fachmann bekannten Verfahren.

### Komponente E

Die optional verwendeten Entformungsmittel E) sind Ester aliphatischer langkettiger Carbonsäuren mit ein- oder mehrwertigen aliphatischen und/oder aromatischen Hydroxyverbindungen. Besonders bevorzugt verwendete aliphatische Carbonsäureester sind Verbindungen der allgemeinen Formel (III):

(R₄-CO-O)₆-R₅-(OH)ₚ mit o = 1 bis 4 und p = 3 bis 0 (III)

wobei R4 ein aliphatischer gesättigter oder ungesättigter, linearer, cyclischer oder verzweigter Alkylrest ist und R5 ein Alkylenrest eines 1- bis 4-wertigen aliphatischen Alkohols R5-(OH)o+p ist.

Besonders bevorzugt für R4 sind C1-C18 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3 -Methylpentyl, 4-Methylpentyl, 1,1-Dimethylbutyl, 1,2-Dimethylbutyl, 1,3-Dimethylbutyl, 2,2-Dimethylbutyl, 2,3- Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl. Alkylen steht für einen geradkettigen, zyklischen, verzweigten oder unverzweigten C1-C18 AlkylenRest. C1-C18-Alkylen steht beispielsweise für Methylen, Ethylen, n-Propylen, iso-Propylen, n-Butyen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrittetrastearat, Glycerinmonostearat, Stearylstearat und Propandioldistearat, bzw. Gemische, daraus und am stärksten bevorzugt Stearylstearat.

Optional können der Zusammensetzungen als weiteres Additiv (F) spezielle UV-Stabilisatoren zugesetzt werden, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-Diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-Cyano-3,3-diphenyl-, 2,2-Bis[[(2-cyano-1-oxo-3,3-diphenyl-2-propenyl)oxy]-methyl]-1,3-propanediylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Besonders bevorzugte spezielle UV-Stabilisatoren sind beispielsweise Tinuvin^{®} 360, Tinuvin^{®} 350, Tinuvin^{®} 329, Hostavin^{®} B-CAP, besonders bevorzugt TIN 329 und Hostavin^{®} B-Cap.

Es können auch Mischungen dieser Ultraviolett-Absorber eingesetzt werden.

Gemäß einer speziellen Ausführungsform der Erfindung enthält die Zusammensetzung Ultraviolett-Absorber in einer Menge von 0 ppm bis 6000 ppm, bevorzugt 500 ppm bis 5000 ppm, und weiter bevorzugt 1000 ppm bis 2000 ppm bezogen auf die Gesamtzusammensetzung.

Die erfindungsgemäßen Polymer-Zusammensetzungen können neben den erfindungsgemäßen Stabilisatoren optional noch weitere übliche Polymeradditive als Komponente F) enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Thermostabilisatoren, von B) verschiedene Flammschutzmittel, optischen Aufheller und Lichtstreumittel in den für die jeweiligen Thermoplasten üblichen Mengen.

Die Herstellung der erfindungsgemäßen Polymer-Zusammensetzungen enthaltend die Komponenten A) bis F) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Additive der erfindungsgemäßen Zusammensetzung durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinhiet einer Spritzgußmaschine erfolgen. Hierbei wird die Schmelze im anschließenden Schritt direkt in einen Formkörper überführt.

Die Herstellung der Kunststoffformteile kann vorzugsweise durch Spritzguß erfolgen.

Von Interesse ist auch die Verwendung der erfindungsgemäßen Kunststoffzusammensetzung zur Herstellung von Mehrschichtsystemen. Hierbei wird die erfindungsgemäße Kunststoffzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponeutenspritzguß. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Ferner betrifft die vorliegende Erfindung die Verwendung von kautschukfreien anhydridmodifizierten alpha-Olefin-Terpolymeren gemäß Komponente C) zur Erhöhung der Fließfähigkeit von Polycarbonatzusammensetzungen sowie die Zusammensetzungen selbst, wobei diese Zusammensetzungen weiterhin gute mechanischen Eigenschaften aufweisen.

Die Polycarbonatzusammensetzungen können optional Flammschutzmittel gemäß Komponente B und / oder Füllstoffe gemäß Komponente D enthalten.

Weiterhin können die Polycarbonatzusammensetzungen in einer bevorzugten Ausführungsform weitere Entformungsmittel und übliche Additive der Komponenten E und F enthalten.

Vorzugsweise entsprechen die Zusammensetzungen mit verbesserter Schmelzefließfähigkeit den oben beschriebenen Zusammensetzungen jedoch mit einem höheren Anteil an Komponente C, wobei der Anteil an Komponente A dementsprechend abnimmt.

Der Anteil an Komponente C beträgt für die Zusammensetzungen mit verbesserter Fließfähigkeit vorzugsweise 0,5 bis 10,0 Gew.-Teile, weiter bevorzugt 1,0 bis 9,0 Gew.-Teile, noch weiter bevorzugt 1,5 bis 8,0 Gew.-Teile, stärker bevorzugt 1,75 bis 6 Gew.-Teile, und besonders bevorzugt 2,0 bis 5,0 Gew.-Teile.

In einer alternativen Ausführungsform betrifft die vorliegende Erfindung auch die zuvor genannte Verwendung der Terpolymere zur Verbesserung der Fließfähigkeit von schlagzähmodifizierten und/ oder mit Flammschutzmitteln auf Phosphorbasis flammgeschützt ausgerüsteten Polycarbonatzusammensetzungen.

Bei der Verwendung von oligomeren phosphat-basierten Flammschutzmitteln ist deren Anteil zugunsten der Komponente A entsprechend erhöht und liegt vorzugsweise in einem Bereich von 5 bis 20 Gew.-Teilen.

### Beispiele

### Komponente A-1

Lineares Polycarbonate auf Basis Bisphenol-A mit einem gewichtsgemittelten Molekulargewicht Mw von 27500 g/mol (bestimmt durch GPC in Dichlormethan mit Polycarbonat als Standard).

### Komponente A-2

Lineares Polycarbonate auf Basis Bisphenol-A mit einem gewichtsgemittelten Molekulargewicht Mw von 30500 g/mol (bestimmt durch GPC in Dichlormethan mit Polycarbonat als Standard).

### Komponente B-1

Kaliumperfluor-1-butansulfonat kommerziell erhältlich als Bayowet® C4 der Firma Lanxess, Leverkusen, Deutschland, CAS-Nr. 29420-49-3.

### Komponente B-2

Polytetrafluorethylen (Blendex® B449 (ca. 50% PTFE und ca. 50 % SAN [aus 80 % Styrol und 20 % Acrylnitril] der Firma Chemtura).

### Komponente C

Ethylen-Propylen-Octen-Maleinsäureanhydrid-Copolymer (Ethylen:Propylen:Octen 87:6:7), CAS-Nr. 31069-12-2, mit Molekulargewicht Mw 5000 g/mol, Dichte 940 kg/m³, Säurezahl 60 mg KOH/g, Maleinsäureanhydridanteil 4,4% bezogen auf das Copolymer C.

### Komponente D-1

CS 7942, geschnittene Kurzglasfasern (anbindend) der Firma Lanxess AG mit einem durchschnittlichen Faserdurchmesser von 14 µm und einer durchschnittlichen Faserlänge von 4,5 mm.

### Komponente D-2

CS108F-14P, geschnittene Kurzglasfasern (nicht anbindend) der Firma 3B mit einem durchschnittlichen Faserdurchmesser von 13,7 µm, einer durchschnittlichen Faserlänge von 4,0 mm.

### Komponente D-3

MF 7980, gemahlene Glasfasern der Firma Lanxess AG mit einem durchschnittlichen Faserdurchmesser von 14 µm, einem durchschnittlichen Faserlänge von 190 µm.

### Komponente D-4

Es wurde Quarzmehl der Firma Quarzwerke GmbH (50226 Frechen, Deutschland) verwendet, welches unter dem Handelsnamen Sikron SF 600 verfügbar ist (d50= 3µm, d95 = 10µm, unbeschlichtet).

### Komponente E-1

Stearylstearat, ein Gleit-/Entformungsmittel (Loxiol G32) der Firma Emery Oleochemicals GmbH mit einem Schmelzpunkt von 54 - 58 °C, einer Verseifungszahl von 108 - 114 mg KOH/g.

### Komponente E-2

Pentaerythrittetrastearat als Gleit-/Entformungsmittel

### Komponente F-1

Stabilisator Irgafos® 168 (Tris-(2,4-di-tert-butyl-phenyl)-phosphit).

Die Schlagzähigkeit nach Charpy wurde nach ISO 179/leU an einseitig angespritzten Prüfstäben der Dimension 80 x 10 x 4 mm. gemessen.

Die Messung der Kerbschlagzähigkeit nach Charpy wird nach ISO 179/leA an Probekörpern der Geometrie 80 * 10 * 4 mm³ durchgeführt.

Der Vicat B/120 als Maß für die Wärmeformbeständigkeit wird bestimmt gemäß ISO 306 an Prüfkörpern der Abmessung 80 x 10 x 4 mm mit einer Stempellast von 50 N und einer Aufheizgeschwindigkeit von 120°C/h.

Die mittlere Teilchengröße d₅₀ ist der Durchmesser, oberhalb und unterhalb dessen jeweils 50 Gew.-% der Teilchen liegen.

Die maximale Teilchengröße d₉₅ ist der Durchmesser, unterhalb dessen 95 Gew.-% der Teilchen liegen.

Die entsprechenden Durchmesser wurden durch Windsichten bestimmt.

Das Brandverhalten wird nach UL 94V an Stäben der Abmessung 127 x 12,7 x 1,0 mm gemessen.

Der E-Modul und die Bruchdehnung wurden gemäß ISO 527 an einem einseitig angespritzten Prüfstab der Dimension 80 x 10 x 4 mm.

Die Bestimmung des Schmelzvolumenrate (MVR) erfolgt nach ISO 1133 (bei 300 °C; 1,2 kg).

**Tabelle 1: Glasfaser I**

| Beispiel | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| A-1 | w.t. % | 4,42 | 4,42 | 4,42 | 4,42 | 4,42 | 4,42 | 4,42 | 4,42 | 4,42 | 4,42 | 4,42 | 4,42 | 4,42 | 4,42 |
| A-2 | w.t. % | 85 | 84,995 | 84,99 | 84,95 | 84,9 | 84,995 | 84,99 | 84,95 | 84,9 | 84,995 | 84,99 | 84,95 | 84,9 | 84,5 |
| B-1 | w.t. % | 0,13 | 0,13 | 0,13 | 0,13 | 0,13 | 0,13 | 0,13 | 0,13 | 0,13 | 0,13 | 0,13 | 0,13 | 0,13 | 0,13 |
| C | w.t. % | | 0,005 | 0,01 | 0,05 | 0,1 | 0,005 | 0,01 | 0,05 | 0,1 | 0,005 | 0,01 | 0,05 | 0,1 | 0,5 |
| D-1 | w.t. % | 10 | 10 | 10 | 10 | 10 | | | | | | | | | |
| D-2 | w.t. % | | | | | | 10 | 10 | 10 | 10 | | | | | |
| D-3 | w.t. % | | | | | | | | | | 10 | 10 | 10 | 10 | 10 |
| E-1 | w.t. % | 0,45 | 0,45 | 0,45 | 0,45 | 0,45 | 0,45 | 0,45 | 0,45 | 0,45 | 0,45 | 0,45 | 0,45 | 0,45 | 0,45 |
| MVR[cm³/10min] | | 5,8 | 5,8 | 5,4 | 5,4 | 5,4 | 5,3 | 5,9 | 4,9 | 4,9 | 5,9 | 6,1 | 6,0 | 6,0 | 6,3 |
| VICAT | | 147 | 146 | 150 | 145 | 144 | 145 | 145 | 144 | 144 | 144 | 144 | 143 | 143 | 143 |
| Charpy-Schlagzähigkeit | | 80 | 77 | 84 | 59 | 156 | 198 | 188 | 214 | 210 | 223 | 237 | 236 | 238 | 271 |
| E-Modul[N/mm²] | | 3744 | 3734 | 3681 | 3813 | 3856 | 3744 | 3827 | 3906 | 3876 | 3038 | 3011 | 3015 | 3028 | 2907 |
| Schmelzeviskosität 300 °C, 1000s⁻¹[pa s] | | 411 | 400 | 441 | 423 | 430 | 450 | 420 | 440 | 428 | 451 | 443 | 447 | 436 | 355 |
| UL 94 V 1,5 mm Bewertung | | V0 | V0 | V0 | V0 | V0 | V0 | V0 | V1 | V0 | V2 | V2 | V0 | V2 | V2 |
| UL 94 V 1,5 mm Gesamt-Nachbrennzeit [s] | | 73 | 78 | 91 | 68 | 68 | 86 | 75 | 97 | 80 | 76 | 67 | 70 | 68 | 112 |

**Tabelle 2: Glasfaser II**

| Beispiel | | 15 | 16 | 17 | 18 | 19 | 20 | 21 | 22 | 23 | 24 | 25 |
|---|---|---|---|---|---|---|---|---|---|---|---|---|
| A-1 | w.t. % | 80 | 79,9 | 79,8 | 79,5 | 79 | 80 | 79,9 | 79,8 | 79,5 | 79 | 78 |
| A-2 | w.t.% | 9,42 | 9,42 | 9,42 | 9,42 | 9,42 | 9,42 | 9,42 | 9,42 | 9,42 | 9,42 | 9,42 |
| B-1 | w.t. % | 0,13 | 0,13 | 0,13 | 0,13 | 0,13 | 0,13 | 0,13 | 0,13 | 0,13 | 0,13 | 0,13 |
| C | w.t.% | | 0,1 | 0,2 | 0,5 | 1 | | 0,1 | 0,2 | 0,5 | 1 | 2 |
| D-1 | w.t. % | 10 | 10 | 10 | 10 | 10 | | | | | | |
| D-2 | w.t. % | | | | | | 10 | 10 | 10 | 10 | 10 | 10 |
| D-3 | w.t. % | | | | | | | | | | | |
| E-1 | w.t. % | 0,45 | 0,45 | 0,45 | 0,45 | 0,45 | 0,45 | 0,45 | 0,45 | 0,45 | 0,45 | 0,45 |
| MVR[cm³/10min] | | 6,8 | 6,3 | 6,4 | 5,6 | 5,3 | 8,24 | 7,6 | 7,3 | 6,6 | 6,2 | 7,8 |
| VICAT[°C] | | 145 | 142 | 141 | 142 | 142 | 145 | 143 | 142 | 142 | 142 | 141 |
| Charpy-Schlagzähigkeit[kJ/m²] | | 131 | | | 213 | 205 | 73 | | | 192 | 197 | 219 |
| Charpy KerbschlagzähigkeitkJ/m²] | | | 10,6 | 12,3 | | | | 9 | 10 | | | |
| E-Modul[N/mm²] | | 4070 | 3994 | 3977 | 4430 | 4562 | 3670 | 3796 | 3843 | 3926 | 4118 | 4162 |
| Schmelzeviskosität 300 °C, 1000s⁻¹[pas] | | 315 | 349 | 331 | 257 | 189 | 324 | 343 | 337 | 280 | 211 | 93 |

**Tabelle 3: Silikat-Füllstoff**

| Beispiel | | 26 | 27 | 28 | 29 | 30 | 31 | 32 | 33 | 34 |
|---|---|---|---|---|---|---|---|---|---|---|
| A-1 | w.t. % | 76,295 | 76,295 | 76,295 | 76,295 | 76,295 | 76,295 | 76,295 | 76,295 | 74,295 |
| A-2 | w.t. % | 3 | 2,895 | 2,89 | 2,85 | 2,8 | 2,7 | 2,4 | 1,9 | 2,9 |
| B-1 | w.t. % | 0,18 | 0,18 | 0,18 | 0,18 | 0,18 | 0,18 | 0,18 | 0,18 | 0,18 |
| B-2 | w.t.% | 0,2 | 0,2 | 0,2 | 0,2 | 0,2 | 0,2 | 0,2 | 0,2 | 0,2 |
| C | w.t.% | | 0,005 | 0,01 | 0,05 | 0,1 | 0,2 | 0,5 | 1 | 2 |
| D-4 | w.t. % | 20 | 20 | 20 | 20 | 20 | 20 | 20 | 20 | 20 |
| E-2 | w.t. % | 0,35 | 0,35 | 0,35 | 0,35 | 0,35 | 0,35 | 0,35 | 0,35 | 0,35 |
| F-1 | w.t. % | 0,075 | 0,075 | 0,075 | 0,075 | 0,075 | 0,075 | 0,075 | 0,075 | 0,075 |
| MVR[cm³/10min]/6min | | 14,1 | 14,0 | 14,4 | 14,6 | 14,4 | 14,9 | 14,9 | 15,4 | 15,0 |
| VICAT[°C] | | 145 | 145 | 144 | 145 | 144 | 144 | 143 | 143 | 142 |
| Charpy-Schlag[kJ/m²] | | 207 | 209 | 296 | 265 | 277 | 260 | 286 | | 270 |
| spröd (Anzahl) | | 10 | 10 | 10 | 10 | 9 | 5 | 2 | | 3 |
| UL 94 (48h) | | 94V-0 | 94V-0 | 94V-0 | 94V-0 | 94V-0 | 94V-0 | 94V-0 | 94V-0 | n.b. |
| Nachbrennzeit 48h [s] | | 39 | 42 | 35 | 47 | 30 | 36 | 37 | 42 | 141 |

## Patentansprüche

1. Flammwidrige, thermoplastische Formmassen enthaltend
A) 47,500 bis 97,939 Gew.-Teile mindestens eines aromatischen Polycarbonats,
B) 0,001 bis 1,000 Gew.-Teile mindestens eines Flammschutzmittels,
C) 0,01 bis 0,50 Gew.-Teile mindestens ein kautschukfreies anhydrid-modifiziertes alpha-Olefin-Terpolymer,
D) 2,0 bis 40,0 Gew.-Teile mindestens eines anorganischen Füllstoffs,
E) 0,05 Gew.-Teile bis 1,00 Gew.-Teile mindestens eines Entformungsmittels,
F) 0,0 - 10,0 Gew.-Teile, weitere übliche Additive,
wobei die Summe der Gewichtsteile der Komponenten A) bis F) sich zu 100 Gewichtsteilen addiert.

2. Formmassen gemäß Anspruch 1, **dadurch gekennzeichnet, daß** Komponente D) in einem Anteil von 7,0 bis 14,0 Gew.-Teilen enthalten ist.

3. Formmassen gemäß Anspruch 1 oder 2, **dadurch gekennzeichnet, daß** Komponente F) in einem Anteil von 1,0 bis 6,0 Gew.-Teilen enthalten ist.

4. Formmassen gemäß einem der Ansprüche 1 bis 3, **dadurch gekennzeichnet, daß** Komponente C) in einem Anteil von 0,20 bis 0,30 Gew.-Teilen enthalten ist.

5. Formmassen gemäß Anspruch 1, **dadurch gekennzeichnet, daß** das Anhydrid ausgewählt ist aus der Gruppe, die Maleinsäureanhydrid, Phthalsäureanhydrid, Fumarsäureanhydrid und Itaconsäureanhydrid sowie deren Mischungen umfaßt.

6. Formmassen gemäß Anspruch 5, **dadurch gekennzeichnet, daß** das Anhydrid Maleinsäureanhydrid ist.

7. Formmassen gemäß Anspruch 5 oder 6, **dadurch gekennzeichnet, daß** das alpha-Olefin-Terpolymer Bausteine enthält ausgewählt aus der Gruppe, die aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, sowie Gemische aus diesen besteht.

8. Formmassen gemäß Anspruch 5, **dadurch gekennzeichnet, daß** das kautschukfreie anhydridmodifizierte T erpolymer
C1) 90,0-98,0 Gew.-% Terpolymer und
C2) 2,0-10,0 Gew.-% Anhydrid
enthält.

9. Formmassen gemäß einem der vorhergehenden Ansprüche, **dadurch gekennzeichnet, daß** das Terpolymer aus Ethylen-, 1-Propen- und 1-Octen-Bausteinen besteht.

10. Formmassen gemäß Anspruch 8 oder 9, **dadurch gekennzeichnet, daß** der olefinische Teil E1) des anhydridmodifizierten Terpolymers **dadurch gekennzeichnet ist, daß**
der Ethylenanteil 96,0-80,0 Gew.-%;
der Propylenanteil 2,0-10,0 Gew.-%; und
der Octenanteil 2,0-10,0 Gew.-% ist.

11. Formmassen gemäß einem der vorhergehenden Ansprüche, **dadurch gekennzeichnet, daß** das kautschukfreie anhydridmodifizierte Terpolymer ein Molekulargewicht Mw von 2000-10000 g/mol besitzt.

12. Verwendung von kautschukfreien anhydridmodifizierten alpha-Olefin-Terpolymeren gemäß Komponente C) zur Erhöhung der Fließfähigkeit von Polycarbonatzusammensetzungen.

13. Verwendung nach Anspruch 12, **dadurch gekennzeichnet, daß** der Anteil an Komponente C für die Zusammensetzungen mit verbesserter Fließfähigkeit vorzugsweise 0,5 bis 10,0 Gew.-Teile, weiter bevorzugt 1,0 bis 9,0 Gew.-Teile, noch weiter bevorzugt 1,5 bis 8,0 Gew.-Teile, stärker bevorzugt 1,75 bis 6 Gew.-Teile, und besonders bevorzugt 2,0 bis 5,0 Gew.-Teile beträgt.

14. Verwendung nach Anspruch 12 oder 13, **dadurch gekennzeichnet, daß** das kautschukfreie anhydridmodifizierte alpha-Olefin-Terpolymer in seinen Komponenten und deren Anteilen durch die Ansprüche 5 bis 11 gekennzeichnet ist.

## Claims

1. Flame-retardant, thermoplastic moulding compositions comprising
A) from 47.500 to 97.939 parts by weight of at least one aromatic polycarbonate,
B) from 0.001 to 1.000 part by weight of at least one flame retardant,
C) from 0.01 to 0.50 part by weight of at least one rubber-free anhydride-modified alpha-olefin terpolymer,
D) from 2.0 to 40.0 parts by weight of at least one inorganic filler,
E) from 0.05 part by weight to 1.00 part by weight of at least one demoulding agent,
F) from 0.0 to 10.0 parts by weight of further conventional additives,
wherein the sum of the parts by weight of components A) to F) is 100 parts by weight.

2. Moulding compositions according to Claim 1, **characterised in that** component D) is present in an amount of from 7.0 to 14.0 parts by weight.

3. Moulding compositions according to Claim 1 or 2, **characterised in that** component F) is present in an amount of from 1.0 to 6.0 parts by weight.

4. Moulding compositions according to any one of Claims 1 to 3, **characterised in that** component C) is present in an amount of from 0.20 to 0.30 part by weight.

5. Moulding compositions according to Claim 1, **characterised in that** the anhydride is selected from the group comprising maleic anhydride, phthalic anhydride, fumaric anhydride and itaconic anhydride and mixtures thereof.

6. Moulding compositions according to claim 5, **characterised in that** the anhydride is maleic anhydride.

7. Moulding compositions according to Claim 5 or 6, **characterised in that** the alpha-olefin terpolymer comprises structural units selected from the group consisting of ethylene, 1-propene, 1-butene, 1-isobutene, 1-pentene, 1-hexene, 1-heptene, 1-octene, 1-nonene, 1-decene, 1-undecene, 1-dodecene, 1-tridecene, 1-tetradecene, 1-octadecene, 1-nonadecene, and mixtures thereof.

8. Moulding compositions according to Claim 5, **characterised in that** the rubber-free anhydride-modified terpolymer comprises
C1) from 90.0 to 98.0 wt.% terpolymer and
C2) from 2.0 to 10.0 wt.% anhydride.

9. Moulding compositions according to any one of the preceding claims, **characterised in that** the terpolymer comprises ethylene, 1-propene and 1-octene structural units.

10. Moulding compositions according to Claim 8 or 9, **characterised in that** the olefinic portion E1) of the anhydride-modified terpolymer is **characterised in that**
the ethylene content is from 96.0 to 80.0 wt.%;
the propylene content is from 2.0 to 10.0 wt.%; and
the octene content is from 2.0 to 10.0 wt.%.

11. Moulding compositions according to any one of the preceding claims, **characterised in that** the rubber-free anhydride-modified terpolymer has a molecular weight Mw of from 2000 to 10,000 g/mol.

12. Use of rubber-free anhydride-modified alpha-olefin terpolymers according to component C) for increasing the flowability of polycarbonate compositions.

13. Use according to Claim 12, **characterised in that** the amount of component C for the compositions with improved flowability is preferably from 0.5 to 10.0 parts by weight, more preferably from 1.0 to 9.0 parts by weight, yet more preferably from 1.5 to 8.0 parts by weight, still more preferably from 1.75 to 6 parts by weight, and particularly preferably from 2.0 to 5.0 parts by weight.

14. Use according to Claim 12 or 13, **characterised in that** the rubber-free anhydride-modified alpha-olefin terpolymer is **characterised in** terms of its components and the amounts thereof by Claims 5 to 11.

## Revendications

1. Matières de moulage thermoplastiques ignifuges, contenant :
A) 47,500 à 97,939 parties en poids d'au moins un polycarbonate aromatique,
B) 0,001 à 1,000 partie en poids d'au moins un agent ignifuge,
C) 0,01 à 0,50 partie en poids d'au moins un terpolymère d'alpha-oléfine modifié par un anhydride sans caoutchouc,
D) 2,0 à 40,0 parties en poids d'au moins une charge inorganique,
E) 0,05 partie en poids à 1,00 partie en poids d'au moins un agent démoulant,
F) 0,0 à 10,0 parties en poids d'autres additifs usuels,
la somme des parties en poids des composants A) à F) étant de 100 parties en poids.

2. Matières de moulage selon la revendication 1, **caractérisées en ce que** le composant D) est contenu en une proportion de 7,0 à 14,0 parties en poids.

3. Matières de moulage selon la revendication 1 ou 2, **caractérisées en ce que** le composant F) est contenu en une proportion de 1,0 à 6,0 parties en poids.

4. Matières de moulage selon l'une quelconque des revendications 1 à 3, **caractérisées en ce que** le composant C) est contenu en une proportion de 0,20 à 0,30 partie en poids.

5. Matières de moulage selon la revendication 1, **caractérisées en ce que** l'anhydride est choisi dans le groupe comprenant l'anhydride de l'acide maléique, l'anhydride de l'acide phtalique, l'anhydride de l'acide fumarique et l'anhydride de l'acide itaconique, ainsi que leurs mélanges.

6. Matières de moulage selon la revendication 5, **caractérisées en ce que** l'anhydride est l'anhydride de l'acide maléique.

7. Matières de moulage selon la revendication 5 ou 6, **caractérisées en ce que** le terpolymère d'alpha-oléfine contient des composants choisis dans le groupe constitué par l'éthylène, le 1-propylène, le 1-butène, le 1-isobutène, le 1-pentène, le 1-hexène, le 1-heptène, le 1-octène, le 1-nonène, le 1-décène, le 1-undécène, le 1-dodécène, le 1-tridécène, le 1-tétradécène, le 1-octadécène, le 1-nonadécène, ainsi que leurs mélanges.

8. Matières de moulage selon la revendication 5, **caractérisées en ce que** le terpolymère modifié par un anhydride sans caoutchouc contient
C1) 90,0 à 98,0 % en poids de terpolymère et
C2) 2,0 à 10,0 % en poids d'anhydride.

9. Matières de moulage selon l'une quelconque des revendications précédentes, **caractérisées en ce que** le terpolymère est constitué par les composants éthylène, 1-propène et 1-octène.

10. Matières de moulage selon la revendication 8 ou 9, **caractérisées en ce que** la partie oléfinique E1) du terpolymère modifié par un anhydride est **caractérisée en ce que**
la proportion d'éthylène est de 96,0 à 80,0 % en poids ;
la proportion de propylène est de 2,0 à 10,0 % en poids ; et
la proportion d'octène est de 2,0 à 10,0 % en poids.

11. Matières de moulage selon l'une quelconque des revendications précédentes, **caractérisées en ce que** le terpolymère modifié par un anhydride sans caoutchouc présente un poids moléculaire Mw de 2 000 à 10 000 g/mol.

12. Utilisation de terpolymères d'alpha-oléfine modifiés par un anhydride sans caoutchouc selon le composant C) pour augmenter la fluidité de compositions de polycarbonate.

13. Utilisation selon la revendication 12, **caractérisée en ce que** la proportion de composant C pour des compositions de fluidité améliorée est de préférence de 0,5 à 10,0 parties en poids, de manière davantage préférée de 1,0 à 9,0 parties en poids, de manière encore davantage préférée de 1,5 à 8,0 parties en poids, de manière davantage préférée de 1,75 à 6 parties en poids et de manière particulièrement préférée de 2,0 à 5,0 parties en poids.

14. Utilisation selon la revendication 12 ou 13, **caractérisée en ce que** le terpolymère d'alpha-oléfine modifié par un anhydride sans caoutchouc est **caractérisé par** les revendications 5 à 11 en ce qui concerne ses composants et leurs proportions.
